# EUROPEAN PATENT SPECIFICATION

(11) **EP 1 790 616 B1**
(45) Date of publication and mention of the grant of the patent: **09.03.2011**
(21) Application number: 05425845.4
(22) Date of filing: 29.11.2005
(51) Int. Cl.: C01F 11/18, F26B 11/04, F27B 7/18, F27B 7/14, F27B 7/16

(54) **Dryer and method for drying precipitated calcium carbonate**
Trockner und Verfahren zur Trocknung von gefälltem Calciumcarbonat
Secheur et procede pour sechage de carbonate de calcium precipite

(43) Date of publication of application: 30.05.2007
(73) Proprietor: Trading Engineering Technologies LLC, Lewes 19958 (US)
(72) Inventor: Foster, John B., Las Cumbres Casa C-217, Panama (PA)
(74) Representative: Leihkauf, Steffen Falk

(56) References cited:
- WO-A-2004/052784
- US-A- 3 333 837
- US-A- 5 297 957
- US-A- 5 848 755
- US-B1- 6 290 152

## Description

The invention relates to a dryer for drying precipitated calcium carbonate (PCC).

There is a growing need of fine and ultra fine dust of very pure calcium carbonate, in particular from the chemical, metallurgical, paper and food industries.

The production of calcium carbonate dust in large quantities is usually carried out through a process with the three following main phases:
- Burning (calcination) of natural limestone CaCo₃ to obtain the lime CaO thanks to the reaction CaCO₃ + heat -> CaO + CO₂
   through a calcination kiln;
- the carbonatization between the lime CaO in water solution (milk of lime) and the carbon dioxide CO₂ to obtain a pure precipitated carbonate calcium (PCC) thanks to the reaction
   Ca(OH)₂ + CO₂ -> CaCO₃ + H₂O + heat
   through a recombination reactor;
- the thickening and the drying of the precipitated calcium carbonate (PCC), till now suspended in the water (PCC slurry), to obtain fine pure calcium carbonate dust with a minimal quantity of humidity.

This invention regards the phase of drying the precipitated calcium carbonate. The PCC slurry coming from the recombination reactors usually has a weight of solid of about 15% ... 30% and it's sent to a gravity decanter, where a PCC thickened slurry settles on the bottom, while a part of cleared water skims the upper part of the decanter and is conveyed in a water tank for the production of new lime milk. The thickened PCC slurry usually has a weight of solid of about 50%.

This thickened PCC slurry is fed in a drying system that comprises a drying chamber heated by a combustion reaction, that develops inside the drying chamber in direct thermal exchange relation with the thickened PCC slurry or outside the drying chamber in thermal exchange relation with the walls of the drying chamber, to obtain a precipitated calcium carbonate dust (PCC) with an humidity better under 0,5% in weight.

US 5,297,957 discloses an organic waste incinerator, wherein a heated surrogate medium is placed in heat transfer relation with high moisture content waste material where water is evaporated to steam.

US 6,290,152 discloses a method for recycling asphalt material, wherein the asphalt material is simultaneously heated and milled in a heated milling apparatus, such as a heated ball mill.

US 3,333,837 discloses a rotatable drying drum with suspended claim systems for heat exchange.

The well-known methods to dry the PCC slurry have the disadvantage that the thermal exchange between the combustion reaction and the PCC slurry is not enough efficient to grant an high quantity of precipitated calcium carbonate in dust at a given time, an electric power consumption and reduced overall dimensions of the dryer.

The purpose of this invention is to find a dryer for the drying of PCC slurry, whose characteristics allows to have an higher production rate and a reduction of the dried precipitated calcium carbonate residual humidity, under the given time, electric power consumption and reduced overall dimensions of the dryer.

These and other purposes are reached through a dryer for the drying of PPC, which includes:
- A drying chamber that delimitates internally the drying space necessary to host the PCC,
- heating means to heat the drying chamber,
- means of handling to move the drying chamber, in order to cause a movement of the PCC in relation with the drying chamber,
- one or more items to increase the surface of the thermal exchange with the PPC, in which these items are disposed in the drying space able to move in relation with the drying chamber, characterized by the features of annexed claim 1.

In order to have a better understanding of the invention and appreciate its advantages, some illustrative and not limitative realizations will follow, in reference to the images enclosed, where:
- fig.1 is a lateral and schematic view of a dryer as per a realization of the invention;
- fig.2 is a section view along the line II-II in fig.1;
- fig.3 is a section view along the line III-III in fig.1;
- fig.4 is a lateral view, partially sectioned, of a particular of the dryer as per a realization of the invention.
- fig.5 is a section view along the lines V-V in fig.4;
- fig.6 is a section view along the line VI-VI in fig.4;
- fig.7 is a section view along the line VII-VII in fig.4;
- fig.8 is a section view along the line VIII-VIII in fig.4;
- fig.9 is a section figure along the line IX-IX in fig.4;
- fig.10 is a schematic view of the dryer operation as per the invention.

With reference to the figures, a dryer for the drying of the precipitated calcium carbonate slurry is indicated with reference 1. Considering that during the drying process the precipitated calcium carbonate slurry (slush of smalls particles in suspension in the water) becomes always denser and denser until to become a very fine precipitated calcium carbonate dust with a very low residual humidity (about 0,5% in weight), in the following description and in the claims it will be used the word PCC (precipitated calcium carbonate) both for the liquid or humid calcium carbonate slurry and the dried calcium carbonate dust that is under processing.

The dryer 1 comprises a drying chamber 2, preferably a metallic cylindrical drum, for example carbon steel or stainless steel, that delimitates an internal space for drying 3 to host the PCC to be dried.

The drying chamber 2 is located in a combustion chamber 4.

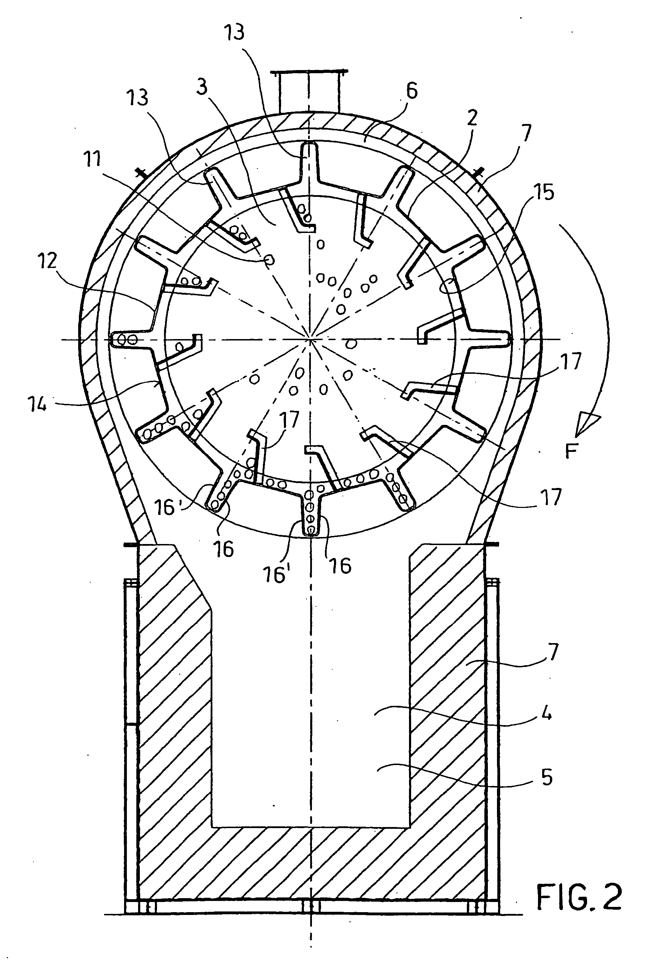

The combustion chamber 4 is parallelepiped in the lower part 5 and is partially cylindrical in the upper part 6 and is internally covered with refractory material 7, for example through refractory bricks in the lower part 5 and insulating fibres in the upper part 6 (fig.2). In the lower part 5 of the combustion chamber 4 are located one or more burners 8, whose flame usually develops lengthwise of the combustion chamber 4 and heats the drying chamber only outside whether through radiation and convection, avoiding a possible contamination of PPC (for example for food or pharmaceutical use) with the toxic products of the combustion.

According with an alternatively way of realization, useful for the production of PCC for industrial uses, the dryer includes means to put the products of the combustion directly inside the drying chamber, causing a direct heating.

The dryer includes also items to move the drying chamber 2, in such a way to cause an agitation in the PPC as regards the drying chamber 2.

The drying chamber is supported, advantageously, in a rotary way around an axis of rotation R and the rotor of an electrical motor 9 at adjustable speed is connected to the drying chamber through a transmission at reduction 10, in order to be able to turn it around the axis of rotation R.

Through the control and the variation of the rotary speed of the drying chamber it is possible to check the degree of agitation of the PCC in the drying chamber.

As per one aspect of this invention, the dryer 1 includes at least one, or preferably more than one of items 11 that increase the thermal exchange surface with the PCC and these items 11 are located in the space of drying 3 and free to move with respect to the drying chamber 2. The presence of the items 11 cause a significant increase of the thermal exchange surface where the PCC can be deposited. The movement of the items 11 in relation with the drying chamber 2 causes also constantly impacts of the items 11 against the PCC, which is desegregated, producing always more useful surfaces for the thermal exchange with the items 11 and with the walls of the drying chamber 2.

As per a realization type of the invention, the items 11, for example steel balls, are completely disconnected from the drying chamber 2 and free floating inside the drying space 3. Alternatively, the items 11 are connected with the drying chamber 2, for example a plurality of steel chains or hinged fins (not shown in the figures)

It appears very advantageous to give items 11, in particular the steel balls, an higher density than the density of the PCC, and a thermal capacity higher than the thermal capacity of the PCC.

It assures that, during their movement through the PCC, the items 11 touch the heated walls of the drying chamber and store up enough thermal energy to be able to act themselves as heating elements.

According to a type of realization, the items 11 includes a plurality of stainless steel balls, for example AISI 304/316 indicated for food and pharmaceutical use, which are advantageously fed in the drying space 3 together with the PCC slurry.

The drying chamber 2 includes possibly a cylindrical or truncated conical drum with a shell 12, that delimitates a plurality of compartments 13, that lean out, so to increase the external surface 14 of the drying chamber 2, which can be exposed to a external heat source, it means the drying chamber 4, and to increase an internal surface 15 of the drying chamber 2 in relation to the thermal exchange with the PCC to be dried.

According to a type of realization, the compartments 13 are located at constant distance along the skirt wall 12.

Advantageously, the compartments 13 are a little tapered outside to make both the PCC and the items 11 contained in such compartments exit easily when they are in a position of emptying during the movement of the drying chamber.

In case of rotary movement around the horizontal axis R, a compartment 13 discharges the PCC when it is near to an high position.

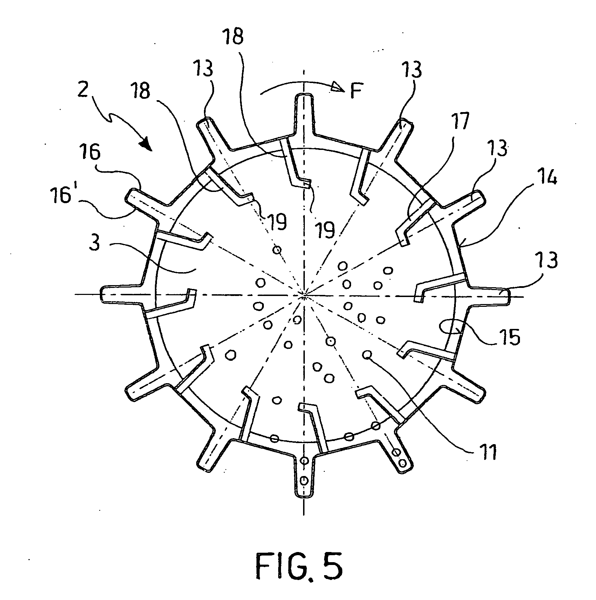

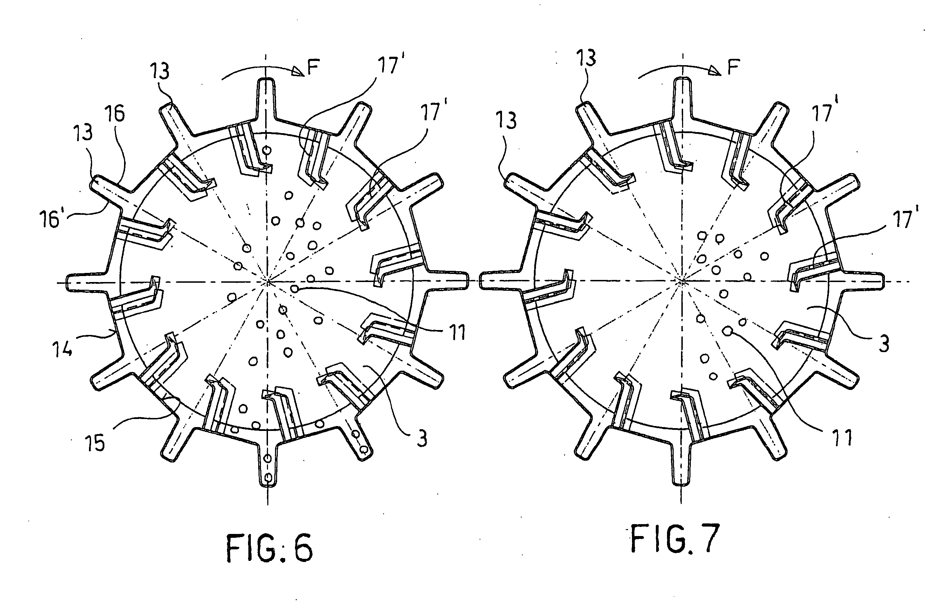

According to the type of realization shown in figures 5,6,7, the compartments 13 extend in a direction almost radial to the rotation axis R of the drying chamber 2 and have two walls 16, about 16' radial to this rotation axis R and faced and approached one to the other till a point, where the average distance between the two radial walls 16, 16' is inferior to their radial extension.

Preferably, this average distance is less than the half, and more preferably than one third of the radial extension of the radial walls 16,16'. Thanks to the radial orientation and the vicinity of the two walls that are faced radially 16, 16', an high external and internal thermal exchange surface is obtained at a given internal volume of the compartments, overall dimension of the drying chamber and the combustion chamber that surrounds it.

According to another type of realization, the dryer 1 includes also a plurality of drag blades 17 that lean out internally from the shell 12 of the drying chamber 2 in the drying space 3. The drag blades 17 are preferably located at the same distance around the shell 12.

Advantageously, each drag blade 17 is located near one of the compartments 13 and orientated and/or shaped so that, when the compartment 13 is in a position (high) where it discharges the PCC (and the balls 11)under the effect of the force of gravity, the discharged PCC flows along the drag blade 17, from which it is hold, before falling freely in the drying space 2.

To this aim, the drag blade 17 includes a part of support 18, preferably flat and inclined - in relation to the radial direction of the rotation axis R - in the rotary direction F of the drying chamber 2. This part of support 18 defines a support level for the PCC that is an extension to the adjoining compartment 13. In order to collect and hold the mixture of PCC and steel balls 11, the drag blade 17 is provided with a specific part of the blade 19, disposed at the internal radial extremity of the drag blade 17 and orientated almost in the rotation direction F of the drying chamber 2. The portion of blade 19 an the portion of support 18 define a corner (the side to the rotation direction) between 90° e 150°, better about 120°.

According to this type of realization, the drag blades 17 extend in the longitudinal direction of the drying chamber 2, preferably along the whole high of the drying space 3.

At least a group of drag blades 17 has a shape or orientation that deviate the flow from the longitudinal direction to the opposite side from the rotation sense R of the drying chamber 2, so that, during the rotation of the drying chamber 2, the PCC is conveyed along the longitudinal direction, creating an effect similar to that one typical for the screw conveyor.

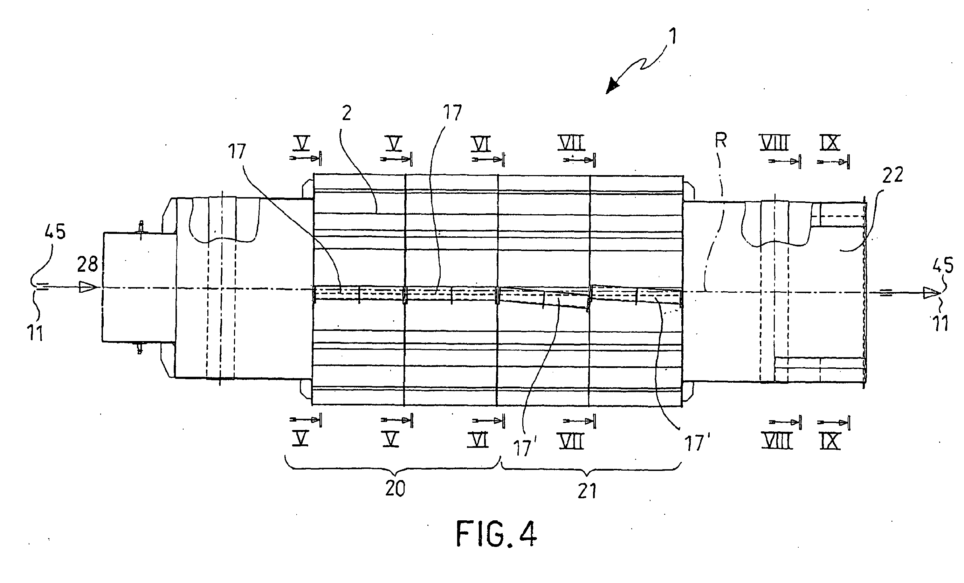

With reference to the type of realization shown in fig. 4, the drying chamber 2 includes a fore portion 20, where the drag blades 17 extend almost exactly in longitudinal direction; it means parallel to the rotation axis R, and another hind portion 21, in which the drag blades 17' deviate from the longitudinal direction, so to produce the effect of longitudinal conveying.

The dryer 1, which includes also a cooling chamber 22, that delimitates a cooling space 23, fitted to host the dried but very hot PCC coming from the drying space 3, and suitable cooling means disposed in thermal exchange relation with the cooling space 23.

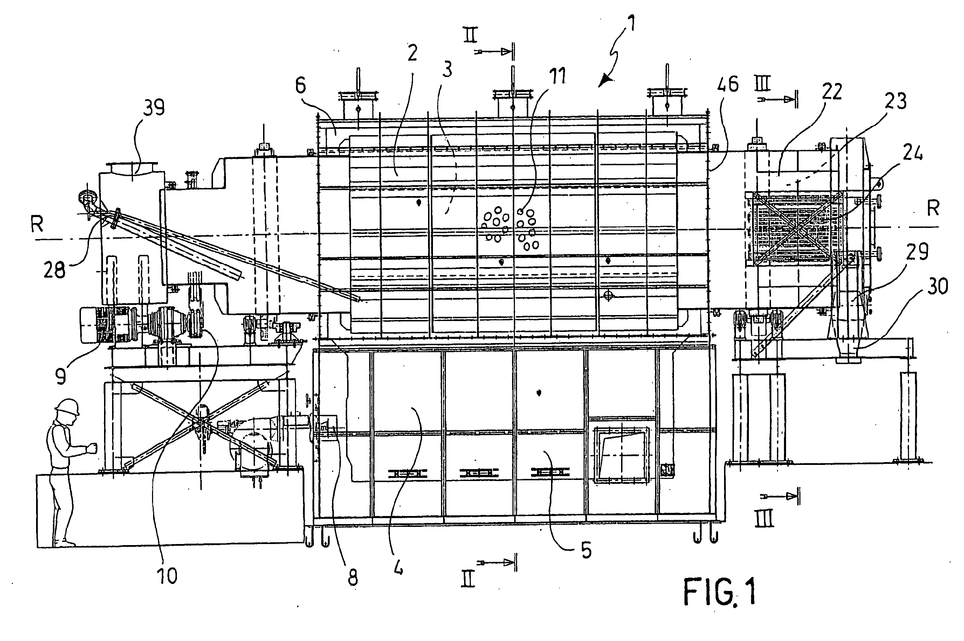

In reference to the type of realization shown in fig.1, the cooling chamber 22 rotates together with the drying chamber 2 and the cooling means include a cooling battery 24 with an high surface, that leans out to the cooling space 23.

The cooling chamber 22 includes advantageously a cylindrical or truncated conical drum portion with a shell 25 and a plurality of drag spoons 26, that are formed or fixed to the shell 25 and that extend from the shell into the cooling space 23. These drag spoons are advantageously disposed constantly around the shell 25 and one of their bended side is turned to the rotation direction F.

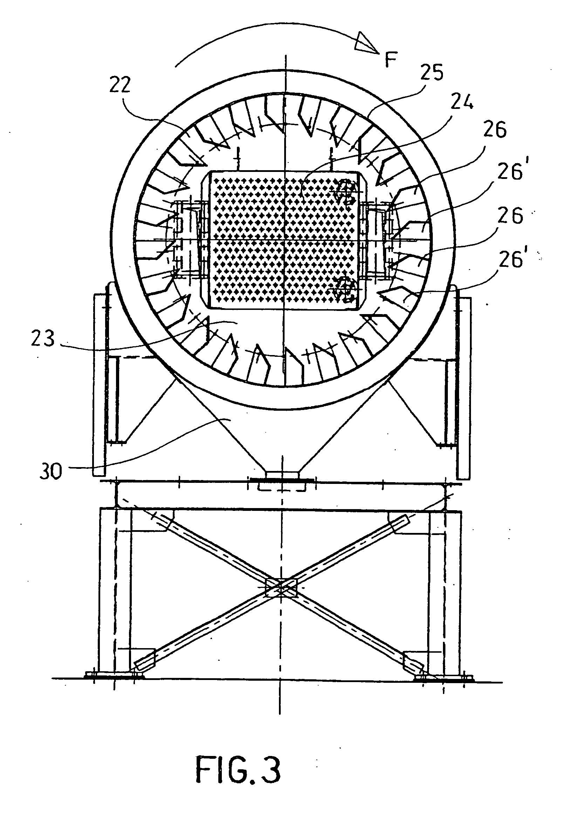

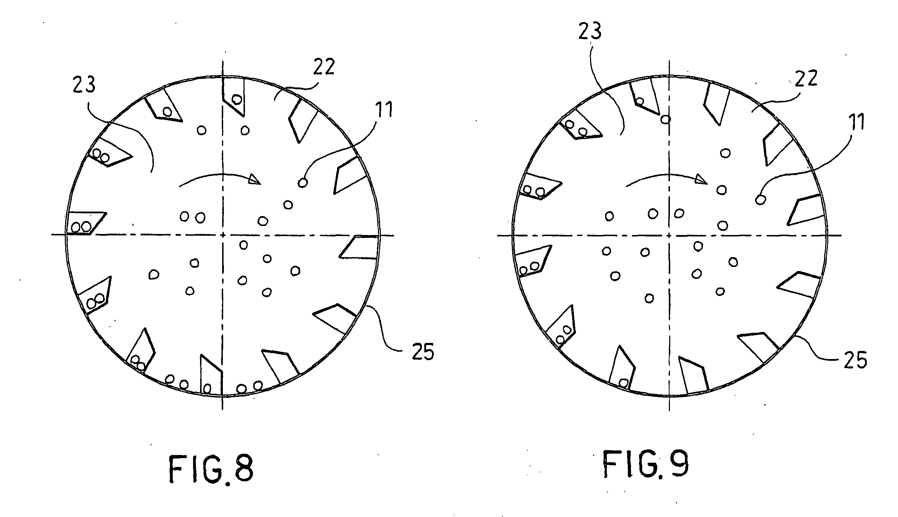

According to a type of realization shown in figures 3,8,9, two trains of drag spoons 26 and 26' are foreseen, axial distanced and angularly stagger one to the other.

As per what already mentioned for the drying chamber 2, also the cooling chamber is advantageously in steel, preferably in carbon steel or stainless steel, for example AISI 304/316, suitable for food and pharmaceutical applications.

Preferably the drying chamber and the cooling chamber should be connected one to the other, for example through welding or screwing, forming a whole item with a drum shape.

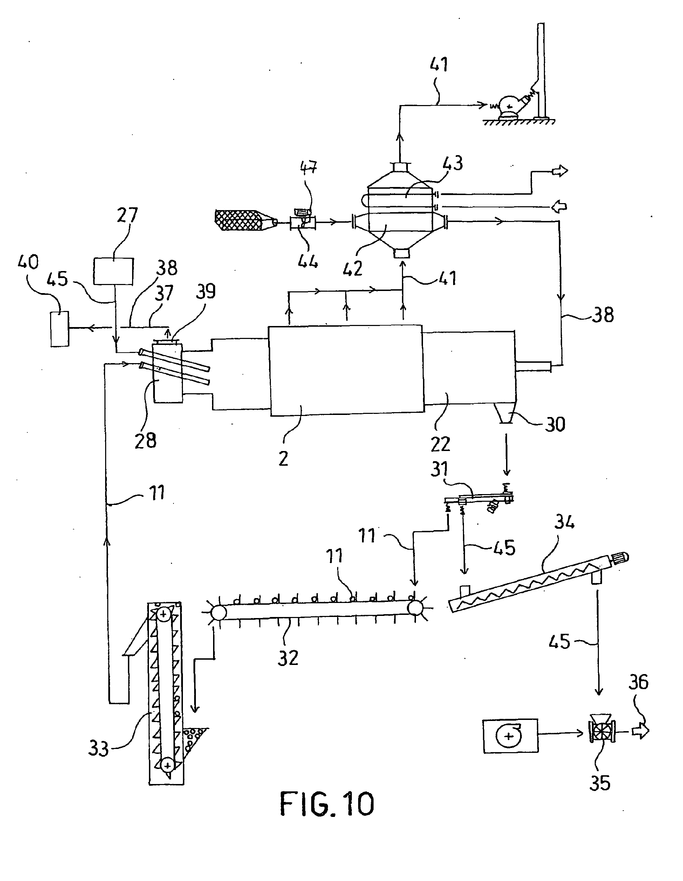

With particular reference to figures 1 and 10, the operation of a drying device equipped the dryer as per the invention will be described hereafter.

The PCC slurry coming from the recarbonation reactors (not shown in the figures) with an humidity of about 82%...83% in weight is fed in a decanter 27 at gravity effect, where the concentrated PCC slurry deposit on the bottom, while a part of cleared water comes out in the higher part of the decanter and is conveyed to a water tank for the production of new PCC slurry.

The concentrated PCC slurry has a percentage in solid weight of about 50%.

The concentrated PCC slurry is then fed, for example through a volumetric pump, in an opening entry 28 of the drying chamber 2, where the PCC is dried till reach a residual humidity of about 0,5% in weight. Thanks to the rotation of the drying chamber, its external surface 14 is uniformly heated by the heat produced in the combustion chamber that surrounds it and the mixture of PCC and steel balls is made whirling inside the drying space. Thanks to the drag blades, the PCC and the balls located in the bottom zone of the drying space are caught and picked in the compartments, where the balls remain in contact with the wall of the drying chamber and heat themselves. When a compartment move to the upper part, the PCC and the balls come out from the compartment and fall again on the drag blade where they are kept before falling in the drying space. In this way, the steel balls create an high thermal exchange surface distributed inside the drying space and, thanks to the impacts between the balls and the PCC crumbs, the PCC is continuously disaggregated and exposed whether to the internal surface of the drying chamber and to the drag blades and to the hot surfaces of the balls themselves. Thanks to the continuous mixing between the PCC and the balls, the PCC, that is going to change into dry and fine dust, undergoes a process of milling and desegregation that improves whether the drying efficacy.and the consistence of the dried PCC.

The inclination of the drag blades contributes to the convey of the dried PCC to the hind portion of the dryer, that forms an exit opening 46 to the cooling chamber. The drag spoons pick up the PCC dust and the steel balls located in the bottom part of the cooling space and drag them to the upper part, where discharge the PCC dust together with the balls over the cooling battery. The PCC dust comes in contact with the cold piping of the cooling battery and cool itself.

In correspondence with an exit opening 29 of the cooling chamber 22 there is a discharge hopper 30, in which convey the dried PCC dust 45 and the balls 11 and from which they are conveyed to a vibrating screen 31, that separate the balls 11 from the PCC 45.

The balls 11 are loaded in a conveyer 32, that transport them till bucket elevator 33, that lift the balls till the high of the entry opening 28 through which they are fed gain in the drying chamber 2. In this way, the balls 11 continuously circulate in the drying chamber 2.

The PCC 45, separated from the balls 11, is loaded on a screw conveyor 34 that lifts it and discharges in a rotary cell 35, from which the PCC 45 is transported pneumatically in the storage silos 36.

The evaporated air 37 inside the drying chamber 2, together with the pre-heated air 38 let in the cooling chamber at the end of the cooling battery, is blown out through a suction cowling 39 located in correspondence with the entry opening 28 of the dryer. This mixture of air 38 and steam 37 could drag a quantity of residual PCC dust and is made pass to a dust exhaust at humid (scrubber) 40.

The combustion 41 gases are hosted in the upper part of the combustion chamber and are made pass through a first heat exchanger 42 for the pre-heating of the air 38 sucked by the ventilator 44 up to the space between the drying chamber and the cooling battery, and through a second heat exchanger 43 for the pre-heating of the water to prepare the lime milk.

The gases are sucked by a centrifugal ventilator 47, whose rotation speed is controlled by a frequency converter, for example an inverter.

Advantageously, the rotation speed of the centrifugal ventilator 47 is controlled from the positive/negative pressure in the combustion chamber, to maintain a negative pressure of some mm of water column and assure that the ambient is not contaminated by the exhaust gases, through the sealing gaps between the rotation dryer and the combustion chamber.

According to this invention, the dryer allows to:
- increase thermal exchange surface of the PCC, thanks to the milling of the balls;
- increase the thermal exchange surface that heat the PCC thanks to the heating of the balls and the contact of the balls surfaces with the PCC, and to the compartments 13 and to the drag blades 17;
- increase the thermal exchange surface of the drying chamber exposed to the combustion chamber, thanks to the compartments 13;
- reduce the overall dimensions of the drying chamber at a given thermal exchange surface, thanks to the balls and the compartments;
- increase the efficacy and therefore the drying speed;
- reduce the fuel consumption;
- improve the dried PCC dust consistency (for the fineness and the lack of crumbs);
- avoid the pollution of PCC by noxious products caused by the combustion, in case of external heating of the drying chamber.

## Claims

1. Dryer (1) for drying precipitated calcium carbonate, comprising:
- a drying chamber (2) defining a drying space (3) for containing the precipitated calcium carbonate (45),
- heating means (4,8) for heating the drying chamber (2),
- movement means (9,10) suitable to move the drying chamber (2), in order to cause a movement of the precipitated calcium carbonate in relation with the drying chamber (2),
- one or more items (11) that increase the thermal exchange surface with the precipitated calcium carbonate, where these items (11) are arranged in the drying space (2) and can be moved in relation with the drying chamber (2),
**characterized in that** the heating means (4,8) comprise a combustion chamber (4) and the drying chamber (2) is arranged at least partially inside the combustion chamber (4), so that the drying chamber (2) can be heated from the outside and the drying chamber (2) comprises a mantle wall (12) defining a plurality of compartments (13) that protrude externally in order to increase the external surface (14) of the drying chamber (2) exposed to said combustion chamber (4) and the internal surface (15) of the drying chamber (2) in thermal exchange relationship with the precipitated calcium carbonate and the items (11).

2. Dryer (1) according to claim 1, wherein said items (11) are completely disconnected to the drying chamber (2) and free to float inside the drying space (3).

3. Dryer (1) according to claim 1, wherein said items (11) are connected to the drying chamber (2).

4. Dryer (1) according to anyone of the preceding claims, wherein said items (11) have a specific weight higher than the specific weight of the precipitated calcium carbonate to be dried.

5. Dryer (1) according to anyone of the preceding claims, wherein said items (11) have a thermal capacity higher than that of the precipitated calcium carbonate to be dried.

6. Dryer (1) according to any one of the preceding claims, wherein, during the movement of the drying chamber (2), the items (11) come into contact with a heated surface (15) of the drying chamber (2) and with the precipitated calcium carbonate, such as to heat the items (11) through the thermal exchange with the heated surface (15) and to heat the precipitated calcium carbonate through the thermal exchange between a surface of said items (11) and the

7. Dryer (1) according to anyone of the preceding claims wherein, during the movement of the drying chamber (2), the items (11) move in relation with the precipitated calcium carbonate and cause the disruption of the precipitated calcium carbonate and increase its thermal exchange surface.

8. Dryer (1) according to anyone of the preceding claims, wherein, said items (11) comprise metal balls, preferably made of stainless steel.

9. Dryer (1) according to anyone of the preceding claims, wherein the drying chamber (2) is supported rotatably around a rotation axis (R) and the means of movement (9,10) include means suitable to rotate the drying chamber (2).

10. Dryer (1) according to the preceding claims, wherein the compartments (13) are disposed uniformly distributed around the mantle wall (12).

11. Dryer (1) according to the preceding claims, wherein the compartments (13) have a shape which is tapered towards the outside such as to ease their emptying when they are in a position of emptying during the movement of the drying chamber (2).

12. Dryer (1) according to anyone of the preceding claims, wherein the compartments (13) extend in a substantially radial direction with respect to a rotation axis (R) of the drying chamber (2).

13. Dryer (1) according to anyone of the preceding claims, wherein the compartments (13) comprise two walls (16, 16') approximately radial to the rotation axis (R) and facing one another and the distance between the two radial walls (16, 16') is less than their radial extension.

14. Dryer (1) according to the preceding claim, wherein the distance between the two radial walls (16, 16') is less than half of their radial extension.

15. Dryer (1) according to anyone of the preceding claims, wherein the drying chamber (2) comprises a drum with a substantially cylindrical or truncated conical mantle wall (12) with the exception of possible compartments (13).

16. Dryer (1) according to anyone of the preceding claims, comprising a plurality of drag blades (17) that extend from a mantle wall (12) of the drying chamber (2) inside the drying space (3).

17. Dryer (1) according to the preceding claim, wherein the drag blades (17) are disposed at constant distances to one another around the mantle wall (12) of the drying chamber (2).

18. Dryer (1) according to anyone of claims 14 or 15, wherein each drag blade (17) is disposed near one of the compartments. (13) and formed so that, when the compartment (13) is in a position where it discharges the precipitated calcium carbonate and the items (11) under the gravity force effect, the precipitated calcium carbonate and the items (11) run along the drag blade (17) before falling in the drying space (2).

19. Dryer (1) according to anyone of claims 16 to 18. wherein the drag blade (17) includes a support portion (18) inclined with respect to the radial direction to the rotation axis (R) in the rotation sense (F) of the drying chamber (2).

20. Dryer (1) according to the preceding claim, wherein the support portion (18) defines a support plane for the PCC and for the items (11).

21. Dryer (1) according to anyone of claims 16 to 20, wherein the drag blade (17) comprises a blade portion (19) located in the radially internal extremity of the drag blade and substantially orientated to the rotation direction (F) of the drying chamber (2).

22. Dryer (1) according to the preceding claim, wherein the blade portion (19) and the support portion (18) define an angle between 90° and 150°, preferably about 120° !(seen from the side facing the rotation direction F).

23. Dryer (1) according to anyone of claims 16 to 22, wherein the drag blades (17) extend substantially in the longitudinal direction of the drying chamber (2), and a plurality (19') of these drag blades (19, 19') deviates from the longitudinal direction to the direction opposite the rotation sense (F) of the drying chamber (2) so that, during the rotation of the drying chamber (2), the PCC is conveyed along the longitudinal direction.

24. Dryer (1) according to the preceding claim, wherein the drying chamber (2) includes a front portion (20), in which the drag blades (19) extend substantially, exactly longitudinally, and a succeeding rear portion (21), in which the drag blades (19') deviate from the longitudinal direction.

25. Dryer (1) according to anyone of the preceding claims, including also:
- a cooling chamber (22) that delimitates a cooling space (23) suitable for containing the dried PCC coming from the drying space (3);
- cooling means (24) in thermal exchange relationship with the cooling space (23).

26. Dryer (1) according to the preceding claim, wherein the cooling chamber (22) is connected with the drying chamber so that it rotates together with the drying chamber (2).

27. Dryer (1) according to anyone of the claim 25 or 26, wherein the cooling means (24) includes a cooling battery having enhanced surface, arranged in the cooling space (23).

28. Dryer (1) according to anyone of claims 25 to 27, wherein the cooling chamber (22) includes a substantially cylindrical or truncated conical mantle wall (25) almost and a plurality of drag spoons (26) that extend from the mantle wall (25) into the cooling space (23).

29. Dryer (1) according to the preceding claim 28, wherein the drag spoons (26) are arranged at constant distances to one another along the mantle wall (25) of the cooling chamber (22).

30. Dryer (1) according to anyone of the preceding claims, wherein the drying chamber (2) and the cooling chamber (22) are made of steel, preferably carbon steel or stainless steel.

31. Method for drying precipitated calcium carbonate, including the phases of:
- heating a drying chamber in thermal exchange relationship with the precipitated calcium carbonate;
- moving the drying chamber, so that it causes a movement of the precipitated calcium carbonate relative to the drying chamber,
- inserting in the drying chamber one or more items that increase the thermal exchange surface for the heat exchange with the precipitated calcium carbonate, wherein these items are movable with respect to the drying chamber, in order to move relative to the drying chamber during its movement, **characterized by**
- providing a combustion chamber (4) and arranging the drying chamber (2) at least partially inside the combustion chamber (4), so that the drying chamber (2) is heated from the outside and
- providing the drying chamber (2) with a mantle wall (12) defining a plurality of compartments (13) that protrude externally in order to increase the external surface (14) of the drying chamber (2) exposed to said combustion chamber (4) and to increase the internal surface (15) of the drying chamber (2) in thermal exchange relationship with the precipitated calcium carbonate and the items (11).

32. Method according to the preceding claim, including the phase of mixing the precipitated calcium carbonate with items for increasing the thermal exchange surface.

33. Method according to claims 31 or 32, wherein these items have a specific weight greater than the density of the precipitated calcium carbonate.

34. Method according to anyone of claims 31 to 33, including the phase of mixing the precipitated calcium carbonate with a plurality of metal balls, that move in the drying chamber.

## Patentansprüche

1. Trockner (1) zur Trocknung von ausgefälltem Calciumcarbonat, enthaltend:
- eine Trockenkammer (2), die einen Trockenraum (3) zum Trocknen des ausgefällten Calciumcarbonats (45) bestimmt,
- Heizeinrichtungen (4,8) zum Heizen der Trockenkammer (2),
- Bewegungseinrichtungen (9,10), die zum Bewegen der Trockenkammer (2) geeignet sind, um eine Bewegung des ausgefällten Calciumcarbonats relativ zur Trockenkammer (2) hervorzurufen,
- ein oder mehrere Elemente (11), die die Wärmetauschfläche mit dem ausgefällten Calciumcarbonat vergrößern, wobei diese Elemente (11) im Trockenraum (3) angeordnet sind und relativ zur Trockenkammer (2) bewegt werden können,
**dadurch gekennzeichnet, dass** die Heizeinrichtungen (4,8) eine Verbrennungskammer (4) umfassen und die Trockenkammer (2) wenigstens teilweise in der Verbrennungskammer (4) angeordnet ist, so dass die Trockenkammer (2) von außen geheizt werden kann, und die Trockenkammer (2) eine Mantelwand (12) aufweist, die mehrere Abteile (13) bestimmt, die nach außen vorstehen, um die der Verbrennungskammer (4) ausgesetzte Außenfläche (14) der Trockenkammer (2) und die in Wärmetauschbeziehung mit dem ausgefällten Calciumcarbonat und den Elementen (11) befindliche Innenfläche (15) der Trockenkammer (2) zu vergrößern.

2. Trockner (1) nach Anspruch 1, bei dem die Elemente (11) von der Trockenkammer (2) vollständig gelöst und frei sind, innerhalb des Trockenraums (3) zu schwimmen.

3. Trockner (1) nach Anspruch 1, bei dem die Elemente (11) mit der Trockenkammer (2) verbunden sind.

4. Trockner (1) nach einem der vorhergehenden Ansprüche, bei dem die Elemente (11) ein spezifisches Gewicht haben, das größer als das spezifische Gewicht des zu trocknenden ausgefällten Calciumcarbonats ist.

5. Trockner (1) nach einem der vorhergehenden Ansprüche, bei dem die Elemente (11) eine Wärmekapazität haben, die größer als die des zu trocknenden ausgefällten Calciumcarbonats ist.

6. Trockner (1) nach einem der vorhergehenden Ansprüche, bei dem während der Bewegung der Trockenkammer (2) die Elemente (11) mit einer geheizten Oberfläche (15) der Trockenkammer (2) und mit dem ausgefällten Calciumcarbonat so in Berührung gelangen, dass die Elemente (11) durch den Wärmetausch mit der geheizten Oberfläche erhitzt werden und das ausgefällte Calciumcarbonat durch den Wärmetausch zwischen einer Oberfläche der Elemente (11) und dem ausgefällten Calciumcarbonat erhitzt wird.

7. Trockner (1) nach einem der vorhergehenden Ansprüche, bei dem während der Bewegung der Trockenkammer (2) sich die Elemente (11) gegenüber dem ausgefällten Calciumcarbonat bewegen und das Zerbrechen des ausgefällten Calciumcarbonats hervorrufen und seine Wärmetauschfläche vergrößern.

8. Trockner (1) nach einem der vorhergehenden Ansprüche, bei dem die Elemente (11) Metallkugeln, vorzugsweise aus Edelstahl, umfassen.

9. Trockner (1) nach einem der vorhergehenden Ansprüche, bei dem die Trockenkammer (2) um eine Drehachse (R) drehbar abgestützt ist und die Bewegungseinrichtungen (9,10) zum Drehen der Trockenkammer (2) geeignete Einrichtungen enthalten.

10. Trockner (1) nach den vorhergehenden Ansprüchen, bei dem die Abteile (13) gleichmäßig um die Mantelwand (12) verteilt angeordnet sind.

11. Trockner (1) nach den vorhergehenden Ansprüchen, bei dem die Abteile (13) eine Gestalt haben, die sich nach außen hin verjüngt, um ihre Entleerung zu vereinfachen, wenn sie sich während der Bewegung der Trockenkammer (2) in einer Entleerungsposition befinden.

12. Trockner (1) nach einem der vorhergehenden Ansprüche, bei dem die Abteile (13) sich in einer im Wesentlichen radialen Richtung bezüglich der Drehachse (R) der Trockenkammer (2) erstrecken.

13. Trockner (1) nach einem der vorhergehenden Ansprüche, bei dem die Abteile (13) zwei Wände (16,16') umfassen, die annähernd radial zur Drehachse (R) sind und einander gegenüber stehen, und der Abstand zwischen den zwei radialen Wänden (16,16') kleiner als ihre radiale Ausdehnung ist.

14. Trockner (1) nach dem vorangehenden Anspruch, bei dem der Abstand zwischen den zwei radialen Wänden (16,16') kleiner als die Hälfte ihrer radialen Erstreckung ist.

15. Trockner (1) nach einem der vorhergehenden Ansprüche, bei dem die Trockenkammer (2) eine Trommel mit einer, abgesehen von möglichen Abteilen (13), im Wesentlichen zylindrischen oder kegelstumpfförmigen Mantelwand (12) umfasst.

16. Trockner (1) nach einem der vorhergehenden Ansprüche, umfassend mehrere Baggerschaufeln (17), die sich von der Mantelwand (12) der Trockenkammer (2) in den Trockenraum (3) erstrecken.

17. Trockner (1) nach dem vorangehenden Anspruch, bei dem die Baggerschaufeln (17) in gegenseitig gleichen Abständen um die Mantelwand (12) der Trockenkammer (2) verteilt angeordnet sind.

18. Trockner (1) nach einem der Ansprüche 14 oder 15, bei dem jede Baggerschaufel (17) nahe einem der Abteile (13) angeordnet und so gestaltet ist, dass wenn sich das Abteil (13) in einer Position befindet, in der es das ausgefällte Calciumcarbonat und die Elemente (11) unter der Wirkung der Schwerkraft entleert, das ausgefällte Calciumcarbonat und die Elemente (11) vor dem Fallen in den Trockenraum (3) an der Baggerschaufel (17) entlang rutschen.

19. Trockner (1) nach einem der Ansprüche 16 bis 18, bei dem die Baggerschaufel (1) einen Abstützabschnitt (18) aufweist, der gegenüber der zur Drehachse (R) radialen Richtung in Drehrichtung (F) der Trockenkammer (2) geneigt ist.

20. Trockner (1) nach dem vorangehenden Anspruch, bei dem der Abstützabschnitt (18) eine Stützebene für das ausgefällte Calciumcarbonat und für die Elemente (11) bestimmt.

21. Trockner (1) nach einem der Ansprüche 16 bis 20, bei dem die Baggerschaufel (17) einen Schaufelabschnitt (19) aufweist, der am radial inneren Ende der Baggerschaufel gelegen ist und im Wesentlichen in die Drehrichtung (F) der Trockenkammer (2) gerichtet ist.

22. Trockner (1) nach dem vorangehenden Anspruch, bei dem der Schaufelabschnitt (1) und der Stützabschnitt (18) einen Winkel zwischen 90° und 150°, bevorzugt etwa 120°, (von der der Drehrichtung F zugewandten Seite gesehen) bestimmen.

23. Trockner (1) nach einem der Ansprüche 16 bis 22, bei dem die Baggerschaufeln (17) sich im Wesentlichen in Längsrichtung der Trockenkammer (2) erstrecken und mehrere (19') dieser Baggerschaufeln (19,19') von der Längsrichtung in die zur Drehrichtung (F) der Trockenkammer (2) entgegengesetzten Richtung abweichen, so dass während der Drehung der Trockenkammer (2) das ausgefällte Calciumcarbonat längs der Längsrichtung gefördert wird.

24. Trockner (1) nach dem vorangehenden Anspruch, bei dem die Trockenkammer (2) einen vorderen Abschnitt (20) aufweist, in dem die Baggerschaufeln (19) sich im Wesentlichen exakt in Längsrichtung erstrecken, und einen nachfolgenden hinteren Abschnitt (21), in dem die Baggerschaufeln (19') von der Längsrichtung abweichen.

25. Trockner (1) nach einem der vorhergehenden Ansprüche, enthaltend weiterhin:
- eine Kühlkammer (22), die einen Kühlraum (23) begrenzt, der zur Aufnahme des aus dem Trockenraum (3) kommenden, getrockneten ausgefällten Calciumcarbonats geeignet ist,
- Kühleinrichtungen (24) in Wärmetauschbeziehung mit dem Kühlraum (23).

26. Trockner (1) nach dem vorangehenden Anspruch, bei dem die Kühlkammer (22) mit der Trockenkammer so verbunden ist, dass sie zusammen mit der Trockenkammer (2) dreht.

27. Trockner (1) nach einem der Ansprüche 25 oder 26, bei dem die Kühleinrichtungen (24) eine Kühlbatterie mit vergrößerter Oberfläche enthalten, die im Kühlraum (23) angeordnet ist.

28. Trockner (1) nach einem der Ansprüche 25 bis 27, bei dem die Kühlkammer (22) eine im Wesentlichen zylindrische oder nahezu kegelstumpfförmige Mantelwand (25) und mehrere Baggerlöffel (26), die sich von der Mantelwand (25) in den Kühlraum (23) erstrecken, enthält.

29. Trockner (1) nach dem vorangehenden Anspruch 28, bei dem die Baggerlöffel (26) in gegenseitig gleichen Abständen um die Mantelwand (25) der Kühlkammer (22) verteilt angeordnet sind.

30. Trockner (1) nach einem der vorhergehenden Ansprüche, bei dem die Trockenkammer (2) und die Kühlkammer (22) aus Stahl, vorzugsweise Kohlenstoffstahl oder Edelstahl, bestehen.

31. Verfahren zum Trocknen von ausgefälltem Calciumcarbonat, enthaltend die Phasen:
- Heizen der Trockenkammer in Wärmetauschbeziehung mit dem ausgefällten Calciumcarbonat;
- Bewegen der Trockenkammer derart, dass sie eine Bewegung des ausgefällten Calciumcarbonats gegenüber der Trockenkammer hervorruft,
- Einleiten eines oder mehrerer Elemente, die die Wärmetauschfläche für den Wärmetausch mit dem ausgefällten Calciumcarbonat vergrößern, in die Trockenkammer, wobei diese Elemente gegenüber der Trockenkammer beweglich sind, um sich gegenüber der Trockenkammer während deren Bewegung zu bewegen, **gekennzeichnet durch**
- Bereitstellen einen Verbrennungskammer (4) und Anordnen der Trockenkammer (2) wenigstens teilweise innerhalb der Verbrennungskammer (4), so dass die Trockenkammer (2) von außen geheizt wird, und
- Versehen der Trockenkammer (2) mit einer Mantelwand (12), die mehrere Abteile (13) bestimmt, die nach außen vorstehen, um die der Verbrennungskammer ausgesetzte Außenfläche (14) der Trockenkammer (2) zu vergrößern und die in Wärmetauschbeziehung mit dem ausgefällten Calciumcarbonat und den Elementen (11) befindliche Innenfläche (15) der Trockenkammer (2) zu vergrößern.

32. Verfahren nach dem vorangehenden Anspruch, enthaltend die Phase des Mischens des ausgefällten Calciumcarbonats mit Elementen zum Vergrößern der Wärmetauschfläche.

33. Verfahren nach den Ansprüchen 31 oder 32, bei dem diese Elemente ein spezifisches Gewicht haben, das größer als die Dichte des ausgefällten Calciumcarbonats ist.

34. Verfahren nach einem der Ansprüche 31 bis 33, enthaltend die Phase des Mischens des ausgefällten Calciumcarbonats mit mehreren Metallkugeln, die sich in der Trockenkammer bewegen.

## Revendications

1. Sécheur (1) pour sécher du carbonate de calcium précipité, comprenant
- une chambre de séchage (2) définissant un espace de séchage (3) pour contenir le carbonate de calcium précipité (45),
- des moyens de chauffage (4, 8) pour chauffer la chambre de séchage (2),
- des moyens de mouvement (9, 10) appropriés à déplacer la chambre de séchage (2), afin d'entraîner un mouvement du carbonate de calcium précipité en relation avec la chambre de séchage (2),
- un ou plusieurs objets (11) qui augmentent la surface d'échange thermique avec le carbonate de calcium précipité, lesdits objets (11) étant agencés dans l'espace de séchage (2) et pouvant être déplacés en relation avec la chambre de séchage (2),
**caractérisé en ce que** les moyens de chauffage (4, 8) comprennent une chambre de combustion (4) et la chambre de séchage (2) est agencée au moins partiellement à l'intérieur de la chambre de combustion (4), de sorte que la chambre de séchage (2) peut être chauffée depuis l'extérieur et la chambre de séchage (2) comprend une paroi enveloppe (12) définissant une pluralité de compartiments (13) qui se projettent à l'extérieur afin d'augmenter la surface externe (14) de la chambre de séchage (2) exposée à ladite chambre de combustion (4) et la surface interne (15) de la chambre de séchage (2) en relation d'échange thermique avec le carbonate de calcium précipité et avec les objets (11).

2. Sécheur (1) selon la revendication 1, dans lequel lesdits objets (11) sont complètement déconnectés de la chambre de séchage (2) et libres de flotter à l'intérieur de l'espace de séchage (3).

3. Sécheur (1) selon la revendication 1, dans lequel lesdits objets (11) sont connectés à la chambre de séchage (2).

4. Sécheur (1) selon l'une quelconque des revendications précédentes, dans lequel lesdits objets (11) ont un poids spécifique plus élevé que le poids spécifique du carbonate de calcium précipité à sécher.

5. Sécheur (1) selon l'une quelconque des revendications précédentes, dans lequel lesdits objets (11) ont une capacité thermique plus élevée que celle du carbonate de calcium précipité à sécher.

6. Sécheur (1) selon l'une quelconque des revendications précédentes, dans lequel, pendant le mouvement de la chambre de séchage (2), les objets (11) viennent en contact avec une surface chauffée (15) de la chambre de séchage (2) et avec le carbonate de calcium précipité, de manière à chauffer les objets (11) via l'échange thermique avec la surface chauffée (15) et pour chauffer le carbonate de calcium précipité via l'échange thermique entre une surfaces desdits objets (11) et le carbonate de calcium précipité.

7. Sécheur (1) selon l'une quelconque des revendications précédentes, dans lequel, pendant le mouvement de la chambre de séchage (2), les objets (11) se déplacent en relation avec le carbonate de calcium précipité et entraînent un ameublissement du carbonate de calcium précipité et augmentent sa surface d'échange thermique.

8. Sécheur (1) selon l'une quelconque des revendications précédentes, dans lequel lesdits objets (11) comprennent des billes de métal, de préférence réalisées en acier inoxydable.

9. Sécheur (1) selon l'une quelconque des revendications précédentes, dans lequel la chambre de séchage (2) est supportée en rotation autour d'un axe de rotation (R) et les moyens de mouvement (9, 10) incluent des moyens appropriés à mettre la chambre de séchage (2) en rotation.

10. Sécheur (1) selon les revendications précédentes, dans lequel les compartiments (13) sont disposés uniformément distribués autour de la paroi enveloppe (12).

11. Sécheur (1) selon les revendications précédentes, dans lequel les compartiments (13) ont une forme qui est effilée vers l'extérieur de manière à faciliter leur vidage lorsqu'ils sont dans une position de vidage pendant le mouvement de la chambre de séchage (2).

12. Sécheur (1) selon l'une quelconque des revendications précédentes, dans lequel les compartiments (13) s'étendent dans une direction sensiblement radiale par rapport à l'axe de rotation (R) de la chambre de séchage (2).

13. Sécheur (1) selon l'une quelconque des revendications précédentes, dans lequel les compartiments (13) comprennent deux parois (16, 16') approximativement radiales par rapport à l'axe de rotation (R) et en face l'une de l'autre, et la distance entre les deux parois radiales (16, 16') est inférieure à leur extension radiale.

14. Sécheur (1) selon la revendication précédente, dans lequel la distance entre les deux parois radiales (16, 16') est inférieure à la moitié de leur extension radiale.

15. Sécheur (1) selon l'une quelconque des revendications précédentes, dans lequel la chambre de séchage (2) comprend un tambour avec une paroi enveloppe sensiblement cylindrique ou en forme de tronc de cône (12) à l'exception d'éventuels compartiments (13).

16. Sécheur (1) selon l'une quelconque des revendications précédentes, comprenant une pluralité de pales traînées (17) qui s'étendent depuis une paroi enveloppe (12) de la chambre de séchage (2) à l'intérieur de l'espace de séchage (3).

17. Sécheur (1) selon la revendication précédente, dans lequel les pales traînées (17) sont disposées à des distances constantes les unes des autres autour de la paroi enveloppe (12) de la chambre de séchage (2).

18. Sécheur (1) selon l'une quelconque des revendications 14 et 15, dans lequel chaque pale traînée (17) est disposée à proximité de l'un des compartiments (13) et est formée de telle façon que, quand le compartiment (13) est dans une position dans laquelle il décharge le carbonate de calcium précipité et les objets (11) sous l'effet des forces de gravité, le carbonate de calcium précipité et les objets (11) se déplacent le long de la pale traînée (17) avant de tomber dans l'espace de séchage (2).

19. Sécheur (1) selon l'une quelconque des revendications 16 à 18, dans lequel la pale traînée (17) inclut une portion de support (18) inclinée par rapport à la direction radiale vers l'axe de rotation (R) dans le sens de rotation (F) de la chambre de séchage (2).

20. Sécheur (1) selon la revendication précédente, dans lequel la portion de support (18) définit un plan de support pour le carbonate de calcium précipité et pour les objets (11).

21. Sécheur (1) selon l'une quelconque des revendications 16 à 20, dans lequel la pale traînée (17) comprend une portion de pale (19) située à l'extrémité radialement interne de la pale traînée et orientée sensiblement vers la direction de rotation (F) de la chambre de séchage (2).

22. Sécheur (1) selon la revendication précédente, dans lequel la portion de pale (19) et la portion de support (18) définissent un angle entre 90° et 150°, de préférence environ 120° (vu depuis le côté qui fait face dans la direction de rotation F).

23. Sécheur (1) selon l'une quelconque des revendications 16 à 22, dans lequel les pales traînées (17) s'étendent sensiblement dans la direction longitudinale de la chambre de séchage (2), et une pluralité (19') de ces pales traînées (19, 19') dévient depuis la direction longitudinale vers la direction opposée au sens de rotation (F) de la chambre de séchage (2) de sorte que, pendant la rotation de la chambre de séchage (2), le carbonate de calcium précipité est convoyé le long de la direction longitudinale.

24. Sécheur (1) selon la revendication précédente, dans lequel la chambre de séchage (2) inclut une portion frontale (20) dans laquelle les pales traînées (19) s'étendent sensiblement exactement longitudinalement, et une portion postérieure (21) qui lui succède, dans laquelle les pales traînées (19') dévient de la direction longitudinale.

25. Sécheur (1) selon l'une quelconque des revendications précédentes, incluant également :
- une chambre de refroidissement (22) qui délimite un espace de refroidissement (23) approprié pour contenir le carbonate de calcium précipité provenant de l'espace de séchage (3) ;
- des moyens de refroidissement (24) en relation d'échange thermique avec l'espace de refroidissement (23).

26. Sécheur (1) selon la revendication précédente, dans lequel la chambre de refroidissement (22) est connectée à la chambre de séchage de telle façon qu'elle tourne ensemble avec la chambre de séchage (2).

27. Sécheur (1) selon l'une quelconque des revendications 25 ou 26, dans lequel les moyens de refroidissement (24) incluent une batterie de refroidissement ayant une surface augmentée, agencée dans l'espace de refroidissement (23).

28. Sécheur (1) selon l'une quelconque des revendications 25 à 27, dans lequel la chambre de refroidissement (22) inclut une paroi enveloppe (25) sensiblement cylindrique ou en forme de tronc de cône et une pluralité d'écopes traînées (26) qui s'étendent depuis la paroi enveloppe (25) jusque dans l'espace de refroidissement (23).

29. Sécheur (1) selon la revendication 28, dans lequel les écopes traînées (26) sont agencées à des distances constantes les unes des autres le long de la paroi enveloppe (25) de la chambre de refroidissement (22).

30. Sécheur (1) selon l'une quelconque des revendications précédentes, dans lequel la chambre de séchage (2) et la chambre de refroidissement (22) sont réalisées en acier, de préférence en acier au carbone ou en acier inoxydable.

31. Procédé pour sécher du carbonate de calcium précipité, incluant les étapes consistant à :
- chauffer une chambre de séchage en relation d'échange thermique avec le carbonate de calcium précipité ;
- déplacer la chambre de séchage, de sorte qu'elle provoque un mouvement du carbonate de calcium précipité par rapport à la chambre de séchage,
- introduire dans la chambre de séchage un ou plusieurs objets qui augmentent la surface d'échange thermique pour l'échange thermique avec le carbonate de calcium précipité, lesdits objets étant mobiles par rapport à la chambre de séchage, afin de se déplacer par rapport à la chambre de séchage pendant son mouvement,
**caractérisé par** les étapes consistant à
- prévoir une chambre de combustion (4) et agencer la chambre de séchage (2) au moins partiellement à l'intérieur de la chambre de combustion (4) de telle façon que la chambre de séchage (2) est chauffée depuis l'extérieur et
- doter la chambre de séchage (2) d'une paroi enveloppe (12) définissant une pluralité de compartiments (13) qui se projettent à l'extérieur afin d'augmenter la surface externe (14) de la chambre de séchage (2) exposée à ladite chambre de combustion (4) et d'augmenter la surface interne (15) de la chambre de séchage (2) en relation d'échange thermique avec le carbonate de calcium précipité et avec les objets (11).

32. Procédé selon la revendication précédente, incluant l'étape consistant à mélanger le carbonate de calcium précipité avec des objets pour augmenter la surface d'échange thermique.

33. Procédé selon les revendications 31 ou 32, dans lequel ces objets ont un poids spécifique plus élevé que la densité du carbonate de calcium précipité.

34. Procédé selon l'une quelconque des revendications 31 à 33, incluant l'étape consistant à mélanger le carbonate de calcium précipité avec une pluralité de billes métalliques qui se déplacent dans la chambre de séchage.
